# EUROPÄISCHE PATENTANMELDUNG

(11) **EP 1 653 363 A1**
(43) Veröffentlichungstag der Anmeldung: **03.05.2006**
(21) Anmeldenummer: 05023310.5
(22) Anmeldetag: 25.10.2005
(51) Int. Cl.: G06F 12/06, H04L 12/403

(54) **Knoten für ein Bus-Netzwerk, Bus-Netzwerk und Verfahren zum Konfigurieren des Netzwerks**

(30) Priorität: 26.10.2004 DE 102004052075
(71) Anmelder: Jungheinrich Aktiengesellschaft, 22047 Hamburg (DE)
(72) Erfinder: Hämmerl, Robert Dipl.-Ing. (FH), 84098 Hohenthann (DE)
(74) Vertreter: Jordan, Volker Otto Wilhelm

(57) **Zusammenfassung**

Die Erfindung stellt unter anderem bereit einen Knoten (16) für ein Bus-Netzwerk, der einen Bus-Controller (30) mit einer Empfangs- und Sende-Schaltungsanordnung (32) und einem Bus-Anschluss zum Senden und Empfangen von Nachrichten über den Bus (14) aufweist und der eine Knotenkennung-Setz-Einrichtung (34, 30) zum Setzen einer Knotenkennung aufweist, auf deren Grundlage der Knoten (16) über den Bus ansprechbar oder/und der Knoten im Netzwerk identifizierbar ist oder/und auf deren Grundlage von dem Knoten gesendete Nachrichten oder/und Nachrichteninhalte identifizierbar sind oder/und auf deren Grundlage für den Knoten relevante Nachrichten oder/und Nachrichteninhalte identifizierbar sind. Erfindungsgemäß ist vorgesehen, dass der Knoten (16) wenigstens einen der Knotenkennung-Setz-Einrichtung zugeordneten, gegenüber dem Bus-Anschluss gesonderten Setzen-Eingangsanschluss (42) aufweist, und dass die Knotenkennung-Setz-Einrichtung (34, 30) durch Anlegen eines Setzen-Signals an dem Setzen-Eingangsanschluss (42) dafür aktivierbar ist, über den Setzen-Eingangsanschluss oder/und den Bus-Anschluss eine Soll-Knotenkennung zu empfangen und diese als die Knotenkennung zu setzen.

## Beschreibung

Die Erfindung betrifft nach einem ersten Aspekt einen Knoten für ein Bus-Netzwerk, der einen Bus-Controller mit einer Empfangs- und Sende-Schaltungsanordnung und einem Bus-Anschluss zum Senden und Empfangen von Nachrichten über den Bus aufweist und der eine Knotenkennung-Setz-Einrichtung zum Setzen einer Knotenkennung aufweist, auf deren Grundlage der Knoten über den Bus ansprechbar oder/und der Knoten im Netzwerk identifizierbar ist oder/und auf deren Grundlage von dem Knoten gesendete Nachrichten oder/und Nachrichteninhalte identifizierbar sind oder/und auf deren Grundlage für den Knoten relevante Nachrichten oder/und Nachrichteninhalte identifizierbar sind.

Nach einem zweiten Aspekt betrifft die Erfindung ein Bus-Netzwerk mit mehreren derartigen Knoten. Nach einem dritten Aspekt betrifft die Erfindung einen gegebenenfalls als Master-Knoten bezeichenbaren Knoten für ein derartiges Bus-Netzwerk, der einen Bus-Controller mit einer Empfangs- und Sende-Schaltungsanordnung und einem Bus-Anschluss zum Senden und Empfangen von Nachrichten über den Bus aufweist und der dafür ausgelegt ist, andere Knoten im Netzwerk zu konfigurieren. Nach einem vierten Aspekt betrifft die Erfindung ein Verfahren zum Konfigurieren eines derartigen Netzwerks.

Der Begriff "Knoten" kann hier für jedes Gerät oder jede Einrichtung stehen, die für eine Datenkommunikation über den Bus mit wenigstens einem anderen Knoten an den Bus anschließbar ist, etwa zur Steuerung dieses Geräts oder dieser Einrichtung über den Bus oder zum Empfangen von Daten von dem Gerät oder der Einrichtung über den Bus, oder auch nur für eine eine entsprechende Datenkommunikation ermöglichende Teilkomponente eines im Prinzip beliebigen Geräts oder einer im Prinzip beliebigen Einrichtung. Anstelle des Begriffs "Knoten" könnte man auch den Begriff "Station" oder "Einheit" verwenden. Ein Beispiel für ein entsprechendes Bus-System oder entsprechendes Netzwerk ist der so genannte CAN-Bus bzw. ein auf Grundlage des CAN-Busses aufgebautes CAN-Bus-Netzwerk. Die Abkürzung CAN steht für "Controller Area Network", und es handelt sich um ein ursprünglich von den Firmen Bosch und Intel als Bus-System für Fahrzeuge (so genannter "Autobus") entwickeltes Bus-System, das sich zwischenzeitlich aber auch im Bereich der Automatisierungstechnik und anderen industriellen Anwendungen als Feldbus bewährt hat. Betreffend das die Grundlage bildende CAN-Bus-System wird auf das CAN-Protokoll gemäß ISO-Norm 11898 verwiesen, die auch die elektrischen Parameter der physikalischen Übertragung über den CAN-Bus festlegt. Entsprechende Bustreiber-Chips und CAN-Controller-Chips sind als Standardbausteine erhältlich. Das CAN-Protokoll bezieht sich im ISO/OSI-Differenzmodell auf die Bit-Übertragungsschicht (Schicht 1) und auf die Sicherungsschicht (Schicht 2).

Der CAN-Bus ist ein serielles Bus-System, bei dem alle angeschlossenen Stationen gleichberechtigt sind, d. h. jedes Gerät (jeder CAN-Knoten) kann jederzeit senden und empfangen. Das auf Grundlage des CAN-Busses aufgebaute CAN-Netzwerk hat eine lineare Struktur, und das Bus-System ist bei Ausfall einer Station für alle anderen Stationen weiter voll verfügbar.

Wichtiger Gesichtspunkt der CAN-Bus-Datenübertragung ist, dass keine Stationen oder Knoten adressiert werden, sondern der Inhalt einer Nachricht durch einen eindeutigen Nummerncode (Identifier) gekennzeichnet wird. Neben dieser Inhaltskennzeichnung legt der Identifier auch die Priorität der Nachricht fest. Die Übertragung von Daten erfolgt nach dem so genannten Producer-Consumer-Model (Erzeuger-Nutzer-Modell). Der CAN-Bus ist multimasterfähig, d. h. jede Station (jeder Knoten) kann zu einem beliebigen Zeitpunkt aus eigenem Antrieb eine Bus-Aktion initiieren. Bei Kollisionen erfolgt die Arbitrierung auf Bit-Ebene auf Grundlage der durch die Identifier definierten Priorität, wobei eine Kollision dadurch erkannt wird, dass ein Sender den von ihm gesendeten Identifier selbst zurückliest und vergleicht und bei Ungleichheit in Folge eines den eigenen rezessiven Pegel überlagernden dominierenden Pegels eines anderen Teilnehmers auf dem Bus erkennt, dass der andere Teilnehmer mit höherer Priorität ebenfalls eine Nachricht gesendet hat. Es wird hierzu auf die umfangreiche Primär- und Sekundärliterator zum CAN-Bus bzw. zum CAN-Protokoll verwiesen.

Aufbauend auf dem CAN-Protokoll wurden speziell für Anwendungen in der Automatisierungstechnik weitere Protokolle definiert, so die Protokolle DeviceNet, SDS (Smart Distributed System), CAL (CAN Application Layer) und CANopen. Das CANopen-Protokoll ist ein standardisiertes, sich auf die Anwendungsschicht (Schicht 7) des OSI/ISO-Schichtmodells beziehendes Protokoll und verzichtet zugunsten eines einfacheren Netzwerkmanagements auf die Multimasterfähigkeit des CAN-Busses und führt einen CAN-Master-Knoten ein, der die Aufgaben des Netzwerkmanagements übernimmt. Alle weiteren CAN-Knoten werden als so genannte Slave-Baugruppen implementiert. Die Kommunikation zwischen den Teilnehmern entspricht nach CANopen überwiegend dem Client-Server-Modell oder Client-Slave-Modell. Die Übertragung von Prozessdaten erfolgt hingegen vorwiegend weiter nach dem Producer-Consumer-Modell.

Auch betreffend CANopen und die anderen hardwareferneren Protokolle wird auf umfangreiche Primär- und Sekundärliteratur verwiesen, speziell auch auf von CiA e.V. (CAN in AUTOMATION Users and Manufactures Group e.V.) herausgegebene Dokumentation und Quasi-Standards bzw. Spezifikationen.

Gemäß dem CANopen-Protokoll beruht zumindest die Kommunikation nach dem Client-Server-Modell auf den Knoten jeweils zugeordneten Knoten-Kennungen, die man auch als Geräteadresse oder Knotenadresse bezeichnen kann. Auf Grundlage der Knoten-Kennung, die bei vielen Geräten durch Dip-Schalter, Lötbrücken oder Brücken am Kabelsatz eingestellt wird, ergibt sich nach dem CANopen-Protokoll dann eine Vorgabe von Identifiern, die das jeweilige Gerät dann als Identifier in über den CAN-Bus gesendeten Nachrichten verwendet bzw. auf die das Gerät reagiert, wenn der betreffende Identifier in einer über den CAN-Bus empfangenen Nachricht enthalten ist. Neben einer hardwaremäßigen Einstellung der Knotenkennung über Dip-Schalter, Lötbrücken, Kabelsatz-Brücken und dergleichen gibt es auch CAN-Knoten, bei denen die Knotenkennung softwaremäßig vorprogrammiert oder beispielsweise mittels einer speziell hierfür vorgesehenen seriellen Schnittstelle softwaremäßig programmierbar ist.

Knoten-Kennungen spielen nicht nur für CAN-Knoten eine Rolle, die für eine Verwendung als CANopen-Client vorgesehen sind, sondern auch bei einfachen CAN-Knoten ohne CAN-Open-Funktionalität, die einen integrierten CAN-Protokoll-Controller aufweisen und als kostengünstige Ein- und Ausgabe-Bauelemente an den CAN-Bus anschließbar sind. Es wird speziell Bezug genommen auf so genannte SLIO-Bausteine (Serial Linked I/O-Bausteine), die beispielsweise die Einbindung von Sensoren und Aktoren ohne lokale Intelligenz in ein CAN-Netzwerk ermöglichen. Derartige SLIO-CAN-Knoten weisen eine Knotenkennung auf, die beispielsweise hinsichtlich einiger Bits vom Hersteller fest vorgegeben und hinsichtlich anderer Bits über Port-Pins oder Dip-Schalter einstellbar ist und eine Konfiguration des Knotens über den CAN-Bus ermöglicht.

Unabhängig von der Art des Busses (seriell, parallel, linear, nicht linear, usw.) und den Ausgestaltungen des jeweils verwendeten Protokolls (Client-Server-Modell, Producer-Consumer-Modell, hardwarenah, hardwarefern, usw.) ergeben sich immer dann Probleme, wenn die ordnungsgemäße Funktion eines Netzwerks von Knoten-Kennungen abhängt. So können etwa im Falle einer Konfiguration der Knoten-Kennungen durch Dip-Switches, Lötbrücken oder Brücken am Kabelsatz Fehler auftreten, die eine falsche Knotenkennung zur Folge haben. So könnte ein Monteur die falsche Kennung einstellen, oder es könnten im Betrieb durch Feuchtigkeit oder Verschmutzungen Fehlkontaktierungen auftreten, die eine an sich richtig eingestellte Knotenkennung verfälschen. Ferner tritt beim Verbauen der Knoten etwa in einem Nutzkraftfahrzeug oder in einer industriellen Fertigungsanlage oder dergleichen ein großer Aufwand dadurch auf, wenn Knoten vor oder nach dem Einbau softwaremäßig an einer jeweiligen Programmierungsschnittstelle programmiert werden müssen oder wenn beim Einbauen durch Brücken im Kabelsatz oder durch Betätigung von Dip-Switches oder dergleichen die Knoten-Kennungen gesetzt werden müssen. Sind die Knoten gemäß einer anderen herkömmlichen Variante von einem Zulieferer schon vorkonfiguriert durch Setzen jeweiliger Knoten-Kennungen, so ergibt sich ein entsprechend größerer Lager- und Logistikaufwand, da funktionsmäßig an sich identische, sich nur durch die Knotenkennung unterscheidende Knoten bereitgehalten und den jeweiligen Einbauorten richtig zugeführt werden müssen.

Der Erfindung liegt die Aufgabe zugrunde, eine Konfiguration von Knoten in einem Netzwerk unabhängig von einer zuvor schon richtig gesetzten Knotenkennung zu ermöglichen.

Zur Lösung dieser Aufgabe stellt die Erfindung nach dem ersten Aspekt einen Knoten für ein Bus-Netzwerk bereit, der einen Bus-Controller mit einer Empfangs- und Sende-Schaltungsanordnung und einem Bus-Anschluss zum Senden und Empfangen von Nachrichten über den Bus aufweist und der eine Knotenkennung-Setz-Einrichtung zum Setzen einer Knotenkennung aufweist, auf deren Grundlage der Knoten über den Bus ansprechbar oder/und der Knoten im Netzwerk identifizierbar ist oder/und auf deren Grundlage von dem Knoten gesendete Nachrichten oder/und Nachrichteninhalte identifizierbar sind oder/und auf deren Grundlage für den Knoten relevante Nachrichten oder/und Nachrichteninhalte identifizierbar sind. Erfindungsgemäß ist vorgesehen, dass der Knoten wenigstens einen der Knotenkennung-Setz-Einrichtung zugeordneten, gegenüber dem Bus-Anschluss gesonderten Setzen-Eingangsanschluss aufweist, und dass die Knotenkennung-Setz-Einrichtung durch Anlegen eines Setzen-Signals an dem Setzen-Eingangsanschluss dafür aktivierbar ist, über den Setzen-Eingangsanschluss oder/und den Bus-Anschluss eine Soll-Knotenkennung zu empfangen und diese als die Knotenkennung zu setzen. Es wird vor allem daran gedacht, dass Knoten genau einen der Knotenkennung-Setz-Einrichtung zugeordneten, gegenüber dem Bus-Anschluss gesonderten Setzen-Eingangsanschluss aufweist.

Vermittels des Setzen-Eingangsanschlusses ist aus mehreren Knoten des Bus-Netzwerks ein jeweiliger, hinsichtlich der Knotenkennung zu konfigurierender Knoten gezielt ansprechbar, ohne dass der Knoten über eine schon gesetzte oder vorgegebene Knotenkennung adressiert werden muss. Dies ermöglicht, dass ein Master-Knoten oder Master-Rechner alle am Bus angeschlossenen Knoten einen nach dem anderen ins Netzwerk aufnimmt, indem über den Setzen-Eingangsanschluss der jeweils als nächster ins Netzwerk aufzunehmende Knoten angesprochen wird und dieser dann die zu setzende Soll-Knotenkennung empfängt, bevorzugt über den Bus. Man könnte hierfür grundsätzlich eine Stern-Topologie vorsehen, bei der jeder Knoten einzeln mit dem Master-Knoten über eine Setzen-Leitungsanordnung verbunden und vom Master-Knoten ansprechbar ist. Die Soll-Knotenkennung würde hingegen bevorzugt vom Master-Knoten über den Bus gesendet werden und insoweit von jedem am Bus angeschlossenen Knoten gefangen werden. Es würde aber nur der über seinen Setzen-Eingangsanschluss angesprochene Knoten die über den Bus empfangene Soll-Knotenkennung als neue Knotenkennung übernehmen und setzen.

Angemerkt sei, dass es grundsätzlich auch in Betracht kommt, dass die Knotenkennung über den Setzen-Eingangsanschluss vom jeweiligen Knoten empfangen wird, beispielsweise im Wege einer analogen Codierung, bei denen ein jeweiliger Signalpegelbereich für eine definierte Knotenkennung steht. Eine solche Codierung der Knoten-Kennungen über an den Setzen-Eingangsanschlüssen angelegte Signale kommt besonders zweckmäßig für die der eigentlichen Bus-Topologie des Netzwerks gewissermaßen überlagerte Stern-Topologie auf Grundlage der mit dem Master-Knoten jeweils einzeln verbundenen Setzen-Eingangsanschlüsse in Betracht.

Betreffend die Konfiguration der Knoten vermittels über den Bus übertragener Soll-Knotenkennungen wird konkreter vorgeschlagen, dass die Knotenkennung-Setz-Einrichtung durch Anlegen des Setzen-Signals an dem Setzen-Eingangsanschluss dafür aktivierbar ist, eine in einer über den Bus-Anschluss empfangenen Setzen-Nachricht enthaltene Soll-Knotenkennung als die Knotenkennung zu setzen. Es wurde in diesem Zusammenhang schon angedeutet, dass der Knoten vorzugsweise dafür ausgelegt ist, auf Grundlage des Setzen-Signals unabhängig von einer momentan gesetzten oder momentan nicht gesetzten Knotenkennung auf die Setzen-Nachricht anzusprechen und die in der empfangenen Setzen-Nachricht enthaltene Soll-Knotenkennung als Knotenkennung zu setzen.

Gegenüber der vorstehend als Ausführungsmöglichkeit angesprochenen sternförmigen Knotenvernetzung auf Grundlage der Setzen-Eingangsanschlüsse (Stern-Topologie) ist eine lineare Topologie deutlich bevorzugt, da zur eigentlichen Bus-Topologie des Netzwerks besser kompatibel. Hierzu wird vorgeschlagen, dass der Knoten wenigstens einen einer Setzen-Signal-Ausgabeeinrichtung zugeordneten, gegenüber dem Bus-Anschluss gesonderten Setzen-Ausgangsanschluss aufweist, und dass die Setzen-Signal-Ausgabeeinrichtung dafür aktivierbar ist, über den Setzen-Ausgangsanschluss ein vordefiniertes oder dem am Setzen-Eingang empfangenen Setzen-Signal entsprechendes Setzen-Signal auszugeben. Es wird vor allem daran gedacht, dass der Knoten genau einen der Setzen-Signal-Ausgabeeinrichtung zugeordneten, gegenüber dem Bus-Anschluss gesonderten Setzen-Ausgangsanschluss aufweist.

Nach diesem Weiterbildungsvorschlag kann in einer Kette von Knoten ein jeweiliger Knoten für die Konfiguration der Knotenkennung ausgewählt und aktiviert werden, indem ein unmittelbar benachbarter, mit seinem Setzen-Ausgangsanschluss am Setzen-Eingangsanschluss des betreffenden Knotens angeschlossener Knoten dafür aktiviert wird, das Setzen-Signal auszugeben. Es kann beispielsweise ein schon konfigurierter Knoten vom Master-Knoten aufgrund seiner Knotenkennung angesprochen werden und dazu angewiesen werden, über seinen Setzen-Ausgangsanschluss den nächsten Knoten in der Kette anzusprechen, damit dieser dazu veranlasst wird, seine Soll-Knotenkennung einer entsprechenden Nachricht auf dem Bus zu entnehmen. Eine andere Möglichkeit ist, dass ein jeweiliger, schon konfigurierter Knoten über seinen Setzen-Eingangsanschluss dazu aktiviert wird, an seinem Setzen-Ausgangsanschluss das Setzen-Signal auszugeben. Für letztere Ausgestaltungsmöglichkeit wird konkret vorgeschlagen, dass die Setzen-Signal-Ausgabeeinrichtung dafür ausgelegt ist, den Setzen-Eingangsanschluss auf eine Beendigung eines daran angelegten Setzen-Signals zu überwachen und in Reaktion auf die Beendigung am Setzen-Ausgangsanschluss das Setzen-Signal auszugeben. Damit auf diese Weise auch in der Kette vom Master-Knoten weiter entfernt liegende Knoten dafür ansprechbar sind, das Setzen-Signal auszugeben, kann man vorsehen, dass dieses Ansprechen des Knotens vermittels eines Nachbarknoten in der Kette erfolgt, der dem Master-Knoten näher ist. Dieser Nachbarknoten kann vermittels einer über den Bus gesendeten Nachricht dafür aktiviert werden, seine Ausgabe des Setzen-Signals an seinem Setzen-Ausgangsanschluss zu beenden. Hierfür wird konkret vorgeschlagen, dass der Knoten dafür ausgelegt ist, bei Ausgabe des Setzen-Signals am Setzen-Ausgangsanschluss den Bus auf das Auftreten einer Nächster-Knoten-Setzen-Nachricht zu überwachen und in Reaktion auf das Auftreten der Nächster-Knoten-Setzen-Nachricht die Ausgabe des Setzen-Signals am Setzen-Ausgangsanschluss zu beenden. Es wird in diesem Zusammenhang vor allem daran gedacht, dass der Knoten dafür ausgelegt ist, auf Grundlage der bestehenden Ausgabe des Setzen-Signals am Setzen-Ausgangsanschluss unabhängig von einer Adressierung der Nächster-Knoten-Setzen-Nachricht an den Knoten auf Grundlage der Knotenkennung auf die Nächster-Knoten-Setzen-Nachricht anzusprechen und die Ausgabe des Setzen-Signals am Setzen-Ausgangsanschluss zu beenden.

Wie schon angesprochen, kann alternativ aber auch die Konfiguration eines jeweils weiteren Knotens hinsichtlich der Knotenkennung durch Adressieren eines schon konfigurierten Nachbarknotens erfolgen. Hierzu wird vorgeschlagen, dass der Knoten dafür ausgelegt ist, den Bus auf das Auftreten einer an den Knoten auf Grundlage der Knotenkennung adressierten Nächster-Knoten-Setzen-Nachricht zu überwachen und in Reaktion auf das Auftreten der Nächster-Knoten-Setzen-Nachricht am Setzen-Ausgangsanschluss das Setzen-Signal auszugeben. Ferner wird in diesem Zusammenhang daran gedacht, dass der Knoten dafür ausgelegt ist, den Bus auf eine das Auftreten einer an den Knoten auf Grundlage der Knotenkennung adressierten Nächster-Knoten-Setzen-fertig-Nachricht zu überwachen und in Reaktion auf das Auftreten der Nächster-Knoten-Setzen-Fertig-Nachricht die Ausgabe des Setzen-Signals am Setzen-Ausgangsanschluss zu beenden.

Vorteilhaft kann der Knoten dafür ausgelegt sein, in Reaktion auf einen Empfang des Setzen-Signals am Setzen-Eingangsanschluss oder/und in Reaktion auf eine über den Bus empfangene Nachricht oder/und in Reaktion auf wenigstens ein anderes definiertes Ereignis eine Rückmeldenachricht über den Bus zu senden, die eine dem Knoten fest zugeordnete Komponentenkennung und die momentane Knotenkennung enthält. Dies ermöglicht eine Kontrolle der Konfiguration des Netzwerks und eine Bestandsaufnahme einer momentanen Konfiguration des Netzwerks. Für eine einfache Kontrolle der Konfiguration insbesondere durch den Master-Knoten wird speziell auch vorgeschlagen, dass der Knoten dafür ausgelegt ist, im Zusammenhang mit dem Setzen der Knotenkennung eine Bestätigungsnächricht oder eine/die Rückmeldenachricht über den Bus zu senden, die eine/die dem Knoten fest zugeordnete Komponentenkennung und die gesetzte Knotenkennung enthält.

Vor allem für weniger ausgedehnte, relativ wenige Knoten enthaltende Netzwerke ist es vorteilhaft, wenn die Knotenkennung-Setz-Einrichtung durch Anlegen eines von dem Setzen-Signal unterschiedlichen Vorgabe-Setzen-Signals an dem Setzen-Eingangsanschluss dafür aktivierbar ist, eine in dem Knoten abgelegte Vorgabe-Knotenkennung als die Knotenkennung zu setzen. Besteht beispielsweise das Netzwerk nur aus voneinander unterschiedlichen, verschiedene Funktionen liefernden Knoten, so bietet sich es an, die Knoten vor dem Aufbau des Netzwerks schon mit der richtigen Knotenkennung vorzukonfigurieren oder von vornherein Knoten mit der richtigen Knotenkennung von einem Zulieferer zu beziehen und insoweit die Konfiguration des Netzwerks hinsichtlich der Knotenkennungen zu vermeiden. Für manche Situationen kann es auch vorteilhaft sein, wenn in dem Knoten mehrere unterschiedliche Vorgabe-Knotenkennungen abgelegt oder ablegbar sind, und dass eine als Knotenkennung zu setzende der Vorgabe-Knotenkennungen vermittels des Vorgabe-Setzen-Signals für das Setzen als Knotenkennung auswählbar ist.

Die Erfindung betrifft nach einem weiteren Aspekt (vgl. oben angesprochenen dritten Aspekt) ferner einen Knoten für ein Bus-Netzwerk mit mehreren erfindungsgemäßen Knoten wie vorangehend angesprochen, der einen Bus-Controller mit einem Empfangs- und Sende-Schaltungsanordnung und einen Bus-Anschluss zum Senden und Empfangen von Nachrichten über den Bus aufweist und der dafür ausgelegt ist, andere Knoten im Netzwerk zu konfigurieren. Erfindungsgemäß wird vorgeschlagen, dass der Knoten eine Netzwerk-Konfigurationseinrichtung aufweist, mit wenigstens einem einer Setzen-Signal-Ausgabeeinrichtung zugeordneten, gegenüber dem Bus-Anschluss gesonderten Setzen-Ausgangsanschluss, dass die Setzen-Signal-Ausgabeeinrichtung von der Netzwerk-Konfigurationseinrichtung dafür aktivierbar ist, über den Setzen-Ausgangsanschluss ein vordefiniertes Setzen-Signal auszugeben, und dass die Netzwerk-Konfigurationseinrichtung dafür ausgebildet ist, vermittels der Setzen-Signal-Ausgabeeinrichtung über den Setzen-Ausgangsanschluss oder - vorzugsweise - vermittels des Bus-Controllers über den Bus-Anschluss eine Setzen-Nachricht zu senden, die eine einem Knoten des Netzwerks zugeordnete Soll-Knotenkennung enthält.

Ein solcher Knoten kann zweckmäßig als Master-Knoten in dem Netzwerk verwendet werden, um wenigstens einen anderen Knoten im Netzwerk hinsichtlich seiner Knotenkennung zu konfigurieren. Es wird vor allem daran gedacht, dass der Knoten genau einen oder genau zwei der Setzen-Signal-Ausgabeeinrichtung zugeordnete, gegenüber dem Bus-Anschluss gesonderte Setzen-Ausgangsanschlüsse aufweist, so dass der Master-Knoten ein äußeres Kettenglied oder ein inneres Kettenglied einer Kette von mehreren Knoten des Netzwerks bilden kann und im ersten Fall einen Knoten nach dem anderen der Kette beginnend mit dem unmittelbar benachbarten Knoten konfiguriert und im zweiten Fall zeitgleich oder überlappend oder nacheinander die Knoten der beiden sich von ihm erstreckenden Teilketten beginnend mit dem jeweils unmittelbar benachbarten Knoten nacheinander konfiguriert.

Um einen Konfigurations-Ist-Zustand zu erfassen, kann der Knoten dafür ausgelegt sein, vermittels des Bus-Controllers eine Rückmeldeaufforderungs-Nachricht über den Bus-Anschluss zu senden. Um von ihm in der Kette weiter entfernt liegende Knoten zu konfigurieren, kann der Knoten dafür ausgelegt sein, vermittels des Bus-Controllers eine Nächster-Knoten-Setzen-Nachricht sowie ggf. eine Nächster-Knoten-Setzen-fertig-Nachricht über den Bus-Anschluss zu senden.

Bevorzugt ist der Knoten dafür ausgelegt, vermittels der Bus-Controllers wenigstens eine auf die gesendete Rückmeldeaufforderung oder/und auf die Ausgabe des Setzen-Signals über den Bus oder/und auf die gesendete Nächster-Knoten-Setzen-Nachricht oder/und auf die gesendete Knoten-Setzen-Nachricht gesendete Rückmeldenachricht oder Bestätigungsnachrichten zu empfangen und deren eine Knotenkennung und eine Komponentenkennung enthaltenden Inhalt mit vorgegebenen Netzwerk-Konfigurationsdaten zu vergleichen. Bei den Netzwerk-Konfigurationsdaten kann es sich beispielsweise um in einem Speicher zuvor abgelegte oder an einer Schnittstelle empfangene Konfigurationsdaten handeln. In diesem Zusammenhang sollte auf die Möglichkeit hingewiesen werden, dass die Codierung der Knoten in einem Netzwerk hinsichtlich ihrer Knoten-Kennungen zweckmäßig auf Grundlage von Daten aus einem Warenwirtschaftssystem erfolgen kann. Diese Daten können zweckmäßig in einem Festwertspeicher des Master-Knotens abgelegt werden, um für eine Erstkonfiguration und später auch noch für eine im Bedarfsfall vorgesehene Nachkonfiguration bereitzustehen.

In diesem Zusammenhang wird weiterbildend vorgeschlagen, dass der Knoten dafür ausgelegt ist, in Abhängigkeit von dem Inhalt der Rückmeldenachricht oder/und in Abhängigkeit von dem Vergleich die Setzen-Nachricht zu senden oder nicht zu senden oder/und die Setzen-Nachricht mit einer von dem Vergleich abhängigen, auf Grundlage der Netzwerk-Konfigurationsdaten festgelegten Soll-Knotenkennung zu senden.

Es wurde explizit und implizit schon angesprochen, dass der jeweilige Knoten (Master-Knoten wie auch einfacher, durch den Master-Knoten konfigurierbarer Client-Knoten) für ein Netzwerk auf Grundlage eines linearen Busses vorgesehen sein kann. Hierzu ist der Bus-Controller mit der Empfangs- und Sende-Schaltungsanordnung dafür ausgeführt, über den linearen Bus Nachrichten zu senden und zu empfangen. Es wird insbesondere daran gedacht, dass der Knoten für ein Netzwerk auf Grundlage eines seriellen Busses vorgesehen ist. Der Bus-Controller ist dann mit der Empfangs- und Sende-Schaltungsanordnung dafür ausgeführt, über den seriellen Bus Nachrichten zu senden und zu empfangen.

Bei dem angesprochenen Bus kann es sich insbesondere um einen so genannten Feldbus handeln. Der Knoten kann also für ein Feldbus-Netzwerk vorgesehen sein. Der Bus-Controller ist dann als Feldbus-Controller mit einer Empfangs- und Sende-Schaltungsanordnung und einem Feldbus-Anschluss zum Senden und Empfangen von Nachrichten über den seriellen Feldbus ausgeführt.

Vor allem, aber nicht ausschließlich, wird daran gedacht, dass der Knoten für ein CAN-Bus-Netzwerk vorgesehen ist. Der Bus-Controller ist dann als CAN-Bus-Controller mit einer CAN-Empfangs- und Sende-Schaltungsanordnung und einem CAN-Bus-Anschluss zum Senden und Empfangen von Nachrichten über den CAN-Bus ausgeführt. In diesem Zusammenhang wird regelmäßig vorgesehen sein, dass der Knoten für eine Datenkommunikation und Netzwerksteuerung über den CAN-Bus gemäß einem CAN-Protokoll, insbesondere gemäß einem eine nachrichtenbezogene, den Inhalt der Nachricht kennzeichnende Adressierung vorsehenden CAN-Protokoll ausgelegt ist. Es wird insbesondere an ein sich auf die Schichten 1 und 2 (Bit-Übertragungsschicht und Sicherungsschicht) des OSI/ISO-Schichtenmodells beziehendes bzw. diesem Schichten zugeordnetes Protokoll gedacht. Als besonders bevorzugt wird vorgeschlagen, dass der Knoten für eine Datenkommunikation und Netzwerksteuerung über den CAN-Bus gemäß einem auf dem/einem CAN-Protokoll aufsetzenden, eine Kommunikation und Netzwerksteuerung nach dem Master-Client-Prinzip vorsehenden Protokoll ausgelegt ist. Es wird insbesondere an ein sich auf die Schicht 7 (Anwendungsschicht) des OSI/ISO-Schichtenmodells beziehendes bzw. dieser Schicht zugeordnetes Protokoll gedacht, vorzugsweise an das CANopen-Protokoll. In diesem Zusammenhang stellt die Erfindung speziell auch einen Knoten bereit, der als Client-Knoten des die Kommunikation- und Netzwerksteuerung nach dem Master-Client-Prinzip vorsehenden Protokolls ausgelegt oder konfiguriert oder konfigurierbar ist. Ferner stellt die Erfindung in diesem Zusammenhang ferner einen Knoten bereit, der als Master-Knoten des die Kommunikation und Netzwerksteuerung nach dem Master-Client-Prinzip vorsehenden Protokolls ausgelegt oder konfiguriert oder konfigurierbar ist.

In der Regel wird der jeweilige Knoten für die Bereitstellung wenigstens einer Nutzfunktionalität, beispielsweise eine analoge Eingabe, analoge Ausgabe, digitale Eingabe, digitale Ausgabe, Sensorik, Aktuatorik und dergleichen, ausgeführt sein. Vorteilhaft kann ein erfindungsgemäßer Knoten eine Prozessoranordnung aufweisen, auf deren Grundlage in Verbindung mit entsprechender Software sowie ggf. mitwirkender zusätzlicher Hardware wenigstens eine Einrichtung oder Funktionalität des Knotens realisiert ist. Beispielsweise kann die Knotenkennung-Setz-Einrichtung auf Grundlage einer ggf. mit dem Bus-Controller zusammenwirkenden Prozessoranordnung realisiert sein. Die Prozessoranordnung könnte in Verbindung mit einer Softwarefunktionalität auch die Bus-Controller-Funktionalität bereitstellen. Ferner kann die Setzen-Signal-Ausgabeeinrichtung auf Grundlage der Prozessoranordnung gebildet sein. Gleiches gilt für die Setzen-Signal-Ausgabeeinrichtung und die Netzwerk-Konfigurations-Einrichtung.

Die Erfindung stellt nach einem weiteren Aspekt (vgl. oben angesprochenen zweiten Aspekt) ferner ein Netzwerk bereit, umfassend mehrere erfindungsgemäße Knoten, insbesondere umfassend wenigstens einen Master-Knoten und mehrere Client-Knoten, sowie umfassend eine die Knoten an ihrem Bus-Anschlüssen verbindende Leitungsanordnung. Für die Bereitstellung der Bus-Topologie sind sich zwischen den Knoten erstreckende Leitungsanordnungssegmente derart zwischen den Bus-Anschlüssen geschaltet oder zumindest bezogen auf über die Leitungsanordnung übertragene Signale miteinander verbunden oder derart von Leitungsanordnungssegment zu Leitungsanordnungssegment durchgehend ausgeführt, dass die Leitungsanordnung einen vorzugsweise linearen oder/und seriellen Netzwerk-Bus bildet, der einen zueinander parallelen, voneinander unabhängigen Empfang von über den Bus übertragenen Nachrichten durch mehrere Knoten vorsieht. Bei der Leitungsanordnung handelt es sich vorzugsweise um ein elektrische Leitungsanordnung. Es kommt durchaus aber auch eine Lichtleiteranordnung in Betracht.

Bevorzugt bilden von den Knoten des Netzwerks mehrere oder vorzugsweise alle eine Kette von an ihren Setzen-Eingangsanschlüssen und Setzen-Ausgangsanschlüssen durch Setzen-Leitungsanordnungen verbundenen Knoten, wobei die Setzen-Leitungsanordnungen sich paarweise zwischen den Knoten erstrecken und nicht von Setzen-Leitungsanordnung zu Setzen-Leitungsanordnung durchgehen. Eine jeweilige Setzen-Leitungsanordnung ist bevorzugt von einer einzigen, ein Paar von Knoten miteinander verbindenden Leitung gebildet. Neben einer elektrischen Verbindung kommt durchaus auch eine optische Verbindung in Betracht.

Für eine einfache Handhabung und einen einfachen Aufbau des Netzwerks auch hinsichtlich der Verbindung zwischen dem Setzen-Eingangs- und Ausgangs-Anschlüssen ist es bevorzugt, dass zumindest bei einem der Knoten, vorzugsweise bei allen Knoten der Bus-Anschluss und der Setzen-Ausgangsanschluss und - bei den Client-Knoten - der Setzen-Eingangsanschluss einen gemeinsamen Bus-Anschlussverbinder aufweisen, beispielsweise einen so genannten Backplane-Stecker oder dergleichen. Obwohl die Verbindung zwischen den Setzen-Eingangs- und Ausgangs-Anschlüssen keine Bus-Topologie aufweist und insoweit nicht als Teil des Netzwerk-Busses angesehen werden kann, wird durch den Weiterbildungsvorschlag die kettenartige Verbindung über die Setzen-Eingangs- und Ausgangsanschlüsse und die Setzen-Leitungsanordnungen gewissermaßen mit dem Netzwerk-Bus zusammengeführt und gemeinsam hinsichtlich der Herstellung der benötigten Verbindungen handhabbar. In einer etwas gröberen, mehr von der Praxis des Monteurs ausgehenden Betrachtungsweise könnte man insoweit durchaus auch davon sprechen, dass auf diese Weise ein Bus mit zusätzlicher, die Konfiguration der Knoten hinsichtlich der Knotenkennung erleichternden Funktionalität bereitgestellt wird.

Es ist schon hinreichend klar geworden, dass das Netzwerk als CAN-Bus-Netzwerk ausgeführt sein kann. Die Knoten sind dann zum Senden und Empfangen von Nachrichten über den einen CAN-Bus bildenden Bus ausgeführt. Es ist auch schon angesprochen worden, dass die Knoten für eine Datenkommunikation und Netzwerksteuerung über den CAN-Bus gemäß einem CAN-Protokoll, insbesondere gemäß einem eine nachrichtenbezogene, den Inhalt der Nachricht kennzeichnende Adressierung vorsehenden CAN-Protokoll ausgelegt sein können. Es wird vor allem daran gedacht, dass die Knoten für eine Datenkommunikation und Netzwerksteuerung über den CAN-Bus gemäß einem auf dem/einem CAN-Protokoll aufsetzenden, eine Kommunikation und Netzwerksteuerung nach dem Master-Client-Prinzip vorsehenden Protokoll, vorzugsweise nach dem CANopen-Protokoll, ausgelegt sind, wobei ein Knoten, vorzugsweise der Master-Knoten für die Netzwerkkonfiguration, als Master-Knoten des die Kommunikation und Netzwerksteuerung nach dem Master-Client-Prinzip vorsehenden Protokolls ausgelegt oder konfiguriert oder konfigurierbar ist und die übrigen Knoten als Client-Knoten des die Kommunikation und Netzwerksteuerung nach dem Master-Client-Prinzip vorsehenden Protokolls ausgelegt oder konfiguriert oder konfigurierbar sind.

Die Erfindung stellt nach einem weiteren Aspekt (vgl. oben angesprochenen vierten Aspekt) ferner ein Verfahren zum Konfigurieren eines erfindungsgemäßen Netzwerks bereit, bei dem wenigstens ein erfindungsgemäßer Master-Knoten mehrere erfindungsgemäße Client-Knoten konfiguriert, indem der Master-Knoten nacheinander für jeden zu konfigurierenden Client-Knoten wenigstens eine Setzen-Nachricht vermittels des Bus-Controllers über den Bus sendet, die eine dem jeweiligen Client-Knoten zugeordnete Soll-Knotenkennung enthält, wobei die zu konfigurierenden Knoten nacheinander durch Anlegen eines Setzen-Signals an ihrem Setzen-Eingangsanschluss dafür aktiviert werden, eine ihnen zugeordnete, in einer über den Bus-Anschluss empfangenen Setzen-Nachricht enthaltene Soll-Knotenkennung als die Knotenkennung zu setzen.

Gemäß einer bevorzugten Ausgestaltung des Verfahrens ist vorgesehen, dass der Master-Knoten zwischen den Setzen-Nachrichten ferner Nächster-Knoten-Setzen-Nachrichten sendet oder/und an seinem Setzen-Ausgangsanschuß die Ausgabe des Setzen-Signals beendet, damit ein schon konfigurierter Knoten an seinem Setzen-Ausgangsanschluss das Setzen-Signal ausgibt, welches ein noch nicht konfigurierter Knoten an seinem Setzen-Eingangsschluss empfängt. Der Master-Knoten kann zur Bestimmung eines momentanen Konfigurationszustand des Netzwerks vorteilhaft wenigstens eine Rückmeldeaufforderung-Nachricht über den Bus-Anschluss senden.

Besonders bevorzugt ist vorgesehen, dass der Master-Knoten wenigstens eine auf die gesendete Rückmeldeaufforderung oder/und auf die Ausgabe des Setzen-Signals über den Bus oder/und auf die gesendete Nächster-Knoten-Setzen-Nachricht oder/und auf die gesendete Knoten-Setzen-Nachricht gesendete Rückmeidenachricht oder Bestätigungsnachricht von einem jeweiligen Client-Knoten oder den Client-Knoten empfängt und deren eine Knotenkennung und eine Komponentenkennung enthaltenden Inhalt mit vorgegebenen Netzwerk-Konfigurationsdaten vergleicht. In diesem Zusammenhang wird weiterbildend vorgeschlagen, dass der Master-Knoten in Abhängigkeit von dem Inhalt der Rückmeldenachricht oder/und in Abhängigkeit von dem Vergleich die Setzen-Nachricht sendet oder nicht sendet oder/und die Setzen-Nachricht mit einer von dem Vergleich abhängigen, auf Grundlage der Netzwerk-Konfigurationsdaten festgelegten Soll-Knotenkennung sendet.

Weitere Ausgestaltungsmöglichkeiten des Verfahrens ergeben sich unter anderem aus den obigen Ausführungen zu den Erfindungs- und Weiterbildungsvorschlägen nach dem ersten, zweiten und dritten Aspekt der Erfindung.

Die Erfindung wird im Folgenden anhand von in den Figuren gezeigten Ausführungsbeispielen und sich aus dem weiteren Text ergebenden Szenarien weiter erläutert, aus denen sich auch weitere Ausgestaltungs- und Weiterbildungsmöglichkeiten der Erfindung nach allen ihren Aspekten ergeben.
- Fig. 1: zeigt schematisch einen Ausschnitt eines auf Grundlage des CAN-Busses aufgebauten Netzwerks gemäß einem Ausführungsbeispiel, bei dem mehrere CAN-Knoten zusätzlich zu ihrer Kopplung über den CAN-Bus an dem Setzen von Knotenkennungen dienenden Codier-Aus- und Eingängen paarweise gekoppelt sind.
- Fig. 2: zeigt schematisch einen Abschnitt eines CAN-Knoten mit Codier-Eingang und Codier-Ausgang und zugehörigen Schaltungen.
- Fig. 3: zeigt schematisch eine Kette von CAN-Knoten mit zwischen den Knoten sich erstreckenden CAN-Bus-Leitungen gemäß CANopen-Standard und erfindungsgemäß zusätzlich vorgesehenen, dem Setzen von Knotenkennungen dienenden CAN-Codier-Leitungen.
- Fig. 4: zeigt ein Beispiel für mögliche Signalzustände eines von einem Knoten an seinem Codier-Ausgang abgegebenen, am Codier-Eingang eines anderen Knoten angelegten Codier-Signals.

Die Erfindung wird im Folgenden anhand des CAN-Busses bzw. anhand eines CAN-Netzwerks näher erläutert, ohne dass hierdurch die Erfindung beschränkt werden soll. Andere Bus-Systeme und Bus-Netzwerkarten kommen ebenfalls in Betracht. Gemäß einem bevorzugten Ausführungsbeispiel ist die Erfindung als Weiterbildung im Rahmen bzw. in Erweiterung des CANopen-Standards anzusehen. Gemäß diesem Standard spielen einzelnen CAN-Knoten zugeordnete Knotenkennungeh für die Kommunikation zwischen Knoten am CAN-Bus eine wichtige Rolle. Es muss jedem Knoten eine eindeutige Knotenkennung (Knotennummer oder ID) zugewiesen sein. Dies geschieht momentan über eine Softwareeinstellung im Knoten, über Dip-Schalter oder einen Codier-Pin am Knoten in Verbindung mit Brücken im die Knoten verbindenden Kabelsatz. Beide herkömmlichen Möglichkeiten haben deutliche Nachteile. So erfordert die Kennungseinstellung über Softwareparameter eine eindeutige Parametervergabe der Kennung, bevor die jeweilige Komponente ins Netzwerk eingebaut wird. Hierfür ist entweder eine vom CAN-Bus unabhängige Parametrisierungsmöglichkeit nötig oder die Komponente hat eine Voreinstellung, die im CAN-Netzwerk nur einmal vorkommt. Letzteres ist ohne übermäßigen Logistikaufwand nicht möglich, wenn gleichartige Komponenten innerhalb eines Netzwerks mehrmals verwendet werden sollen. Die Hardware-Codierung über Dip-Schalter oder Codier-Pins bringt demgegenüber einen wesentlichen Aufwand für die Codierung mit sich, und zwar um so mehr Aufwand, je mehr gleichartige Komponenten in dem Netzwerk verwendet werden. Es besteht die Gefahr von Fehlcodierungen und die Gefahr, dass es durch Kontaktprobleme (Alterung, Feuchtigkeit usw.) beim Auswerten der Hardware-Codierung zu fehlerhaften Kennungen kommen kann.

Die Erfindung erreicht gegenüber diesen herkömmlichen Lösungen gemäß einem bevorzugten Ausführungsbeispiel wesentliche Verbesserungen dadurch, dass die Netzwerk-Knoten, gemäß dem hier zugrundegelegten Ausführungsbeispiel die CAN-Knoten, einen steuerbaren Codierausgang haben, der mit einem Codiereingang des in einer Kette von Knoten nachfolgenden Knoten verbunden ist. Die erste Komponente in der Kette signalisiert durch ihren steuerbaren Codierausgang der Folgekomponente den Codierwunsch. Daraufhin liest die Folgekomponente über das Signal am Codiereingang oder über eine definierte Nachricht am Bus (hier am CAN-Bus) ihre Knotenkennung ein. Ist die so erhaltene Knotenkennung gesetzt, kann sich die Komponente im Netzwerk melden und ihrer Folgekomponente über ihren Codierausgang den Codierwunsch signalisieren. Auf diese Weise kann entlang des CAN-Busses Komponente um Komponente in das Netzwerk aufgenommen werden.

Die gesetzte Knotenkennung ermöglicht die übliche Kommunikation über den Bus nach einem der relevanten Standards, beispielsweise nach dem CANopen-Standard. Danach ist die Knotenkennung (insbesondere eine jeweilige Knotennummer 1 bis 127) Teil eines Identifiers einer jeweiligen CANopen-Nachricht (insbesondere 11 Bit Identifier). Gemäß CANopen stehen standardmäßig 8 Bit-Nutzdaten zur Verfügung, von denen für einen CANopen-Slave-Knoten beispielsweise 4 Byte für Eingangsdaten (beispielsweise Ausgabepegel von 4 Analog-Ausgängen) und 4 Byte für Ausgangsdaten (beispielsweise gemessene Pegel von 4 Analog-Eingängen) zur Verfügung stehen.

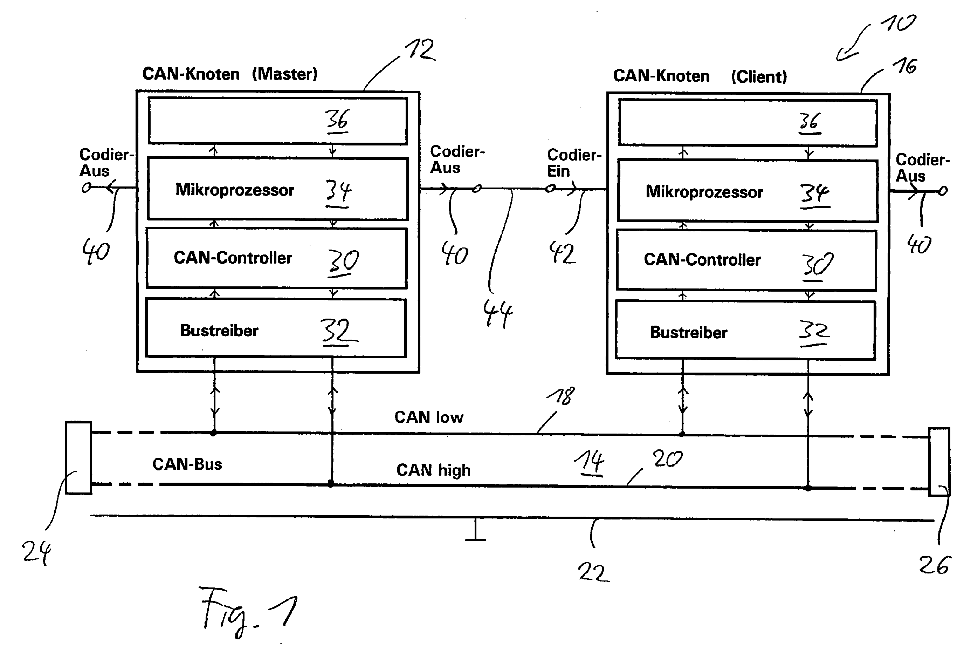

Fig. 1 zeigt beispielhaft einen Ausschnitt aus einem CAN-Bus-Netzwerk 10, mit einem Master-Knoten 12 und mehreren mit dem Master-Knoten über den CAN-Bus 14 verbundenen Client-Knoten 16, von denen in Fig. 1 nur einer gezeigt ist. Die Bezeichnung "Master" und "Client" bezieht sich hier vorrangig darauf, dass der Master-Knoten über den CAN-Bus und eine zusätzliche paarweise Codierverbindung zwischen den Knoten die Konfiguration der Client-Knoten hinsichtlich ihrer Knotenkennung steuert. Wird ein Protokoll auf Grundlage des Master-Client- oder Master-Slave-Prinzips verwendet, so ist der Master-Knoten für die Kennungskonfiguration bevorzugt zugleich aber auch der Master-Knoten nach diesem Protokoll, also etwa der CANopen-Master, und es sind die betreffend die Kennungskonfiguration vom Master-Knoten gesteuerten Client-Knoten zugleich auch die Client-Knoten oder Slave-Knoten nach dem Protokoll.

Die Kommunikation über den CAN-Bus 14 erfolgt über eine CAN low-Leitung 18 und CAN high-Leitung 20, an denen bezogen auf eine Bezugsmasse 22 (CAN -) definierte Spannungspegel von einem eine Nachricht sendenden Knoten angelegt werden, etwa einen dominanten Pegel von 3,5 V an CAN high und 1,5 V an CAN low entsprechend einer logischen 0 und einem rezessiven Pegel von 2,5 V an CAN high und 2,4 V an CAN low entsprechend einer logischen 1. Maßgeblich ist das Differenzsignal zwischen CAN high und CAN low. Die CAN-Knoten hängen zueinander parallel an dem linearen Bus 14, der an seinen beiden Enden durch Abschlusswiderstände 24 und 26 abgeschlossen ist.

Entsprechend einer üblichen Ausgestaltung kann ein jeweiliger Knoten mit einem dezidierten CAN-Controller 30 ausgeführt sein, der über eine Bustreiber-Schaltungsanordung 32 am CAN-Bus 14 hängt. Die Bustreiber-Schaltung kann funktionell in eine Sende-Schaltung und eine EmpfangsSchaltung aufgegliedert sein. Der CAN-Controller empfängt über den Bus zu sendende Ausgabedaten von einem Mikroprozessor 34 und gibt über den Bus empfangene Eingangsdaten an den Mikroprozessor 34 weiter. Es sei angemerkt, dass der Mikroprozessor 34 mit entsprechender Betriebssoftware auch selbst die Funktion des CAN-Controllers übernehmen könnte, so dass der Block 30 in den Knoten gemäß Fig. 1 auch nur für eine entsprechende, auf Grundlage des Mikroprozessors und von Software realisierte Funktionalität des Knotens stehen könnte. Ein Block 36 steht allgemein für weitere durch dezidierte Hardware oder/und durch Betriebssoftware in Verbindung mit dem Mikroprozessor realisierte Funktionalitäten des jeweiligen Knotens, insbesondere auch für Nutz-Funktionalitäten des Knotens wie die Erfassung von Prozessdaten, die Ausgabe von Steuerungsdaten, Aktuatorik usw.. Es können beliebige, im Fachgebiet im Zusammenhang mit CAN-Knoten bekannte Funktionalitäten realisiert sein.

Erfindungsgemäß weisen die Knoten der Konfiguration der Knoten hinsichtlich ihrer Knotenkennung dienende Funktionalitäten auf, auf Grundlage einer Ausführung der Client-Knoten sowie des Master-Knotens jeweils mit zumindest einem Codier-Ausgang 40 und der Client-Knoten jeweils mit zumindest einem Codier-Eingang 42. Wie in Fig. 1 dargestellt, weist ein Master-Knoten 12 bevorzugt zwei Codier-Ausgänge 40 auf, und ein Client-Knoten 16 bevorzugt einen Codier-Eingang 42 und einen Codier-Ausgang 40. Ein Master-Knoten 12 kann dann in einer Kette von Client-Knoten 16 entweder als End-Knoten oder alternativ zwischen Client-Knoten angeordnet sein. Die Kette von Knoten ist definiert durch die paarweise Verbindung der Codier-Aus und -Eingänge durch Codier-Leitungen 44, die einerseits an dem Codier-Ausgang 40 des einen Knotens und andererseits an dem Codier-Eingang 42 des anderen Knotens angeschlossen sind. Bevorzugt entspricht diese Verkettung der Knoten der Reihenfolge der Knoten am linearen CAN-Bus 14.

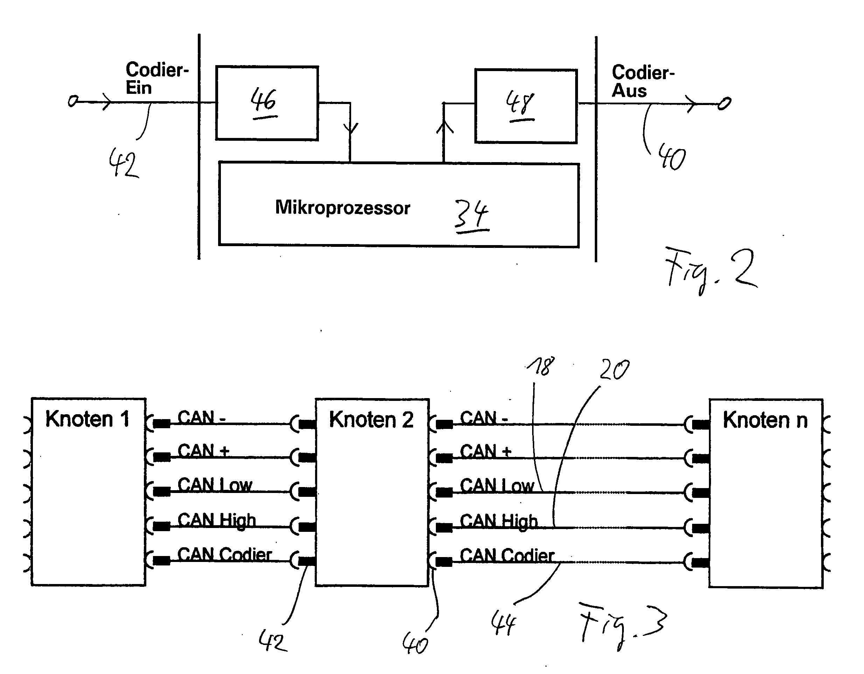

Ein am Codier-Eingang 42 anliegendes Signal wird durch eine Empfangsschaltung 46 empfangen, die erfasste Ansteuerzustände des Codier-Eingangs durch entsprechende Signale oder Daten dem Mikroprozessor 34 mitteilt. Der Mikroprozessor 34 seinerseits kann durch Ansteuerung einer Ausgabeschaltung 48 definierte Ausgabesignale über den Codier-Ausgang 40 ausgeben. Es wird auf Fig. 2 verwiesen. Der Master-Knoten kann entsprechend ausgeführt sein, mit einer oder mehreren Ausgabeschaltungen 48 in Zuordnung zu seinem wenigstens einem, hier mehreren (zwei) Codierausgängen 40.

Es sei angemerkt, dass es durchaus in Betracht kommt, in einer reinen Hardware-Betrachtung für die Ausführung der Erfindung herkömmliche Knoten zu verwenden, nämlich für einen Master-Knoten einen solchen Knoten, der wenigstens einen steuerbaren Analog-Ausgang aufweist, und für einen Slave-Knoten einen solchen Knoten, der wenigstens einen Analog-Eingang und wenigstens einen Analog-Ausgang aufweist, wobei dann als Codier-Eingang ein solcher Analog-Eingang und als Codier-Ausgang ein solcher Analog-Ausgang verwendet wird. Es können dann diese Ein- und Ausgänge durch Codier-Leitungen verbunden werden, um die Kette von Knoten zu bilden, und es könnte durch entsprechende Programmierung des Mikroprozessors der Knoten mit entsprechenden Funktionalitäten für das Setzen der Knotenkennung auf Grundlage eines am Codier-Eingang anliegenden Codier-Signals und zum Ansprechen eines Nachbar-Knotens für das Setzen der Knotenkennung durch Ausgabe eines Codier-Signals am Codier-Ausgang ausgestattet sein.

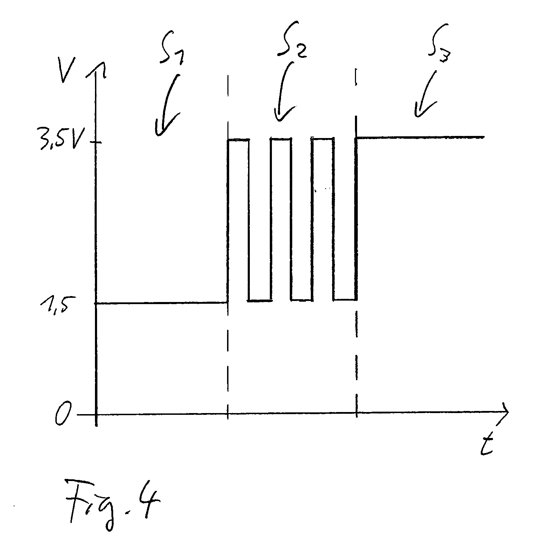

Der Mikroprozessor 34 überwacht ständig oder zumindest in einem durch wenigstens ein definiertes Ereignis auslösbaren Überwachungszustand den Codier-Eingang, ob am Codier-Eingang ein Setzen-Signal (Codier-Signal) anliegt oder nicht. Die Codier-Ausgänge des Master-Knotens und der Client-Knoten können also zumindest zwei logische Zustände annehmen, die als "passiv" und "aktiv" bezeichenbar sind, wobei der Zustand "aktiv" dem Setzen-Signal entspricht und der Zustand "passiv" einem fehlenden Setzen-Signal entspricht. Das Setzen-Signal kann beispielsweise ein zwischen zwei Spannungspegeln alternierendes Signal sein, etwa entsprechend dem Signal S₂ gemäß Fig. 4, wohingegen der Zustand "passiv" einem konstanten Pegel (Pegel 0 bzw. auf Masse gelegt oder - bevorzugt - ein definierter Spannungspegel größer 0, etwa entsprechend dem Signal S₁ gemäß Fig. 4) entsprechen könnte. Ein definierter Pegel größer 0 oder ein anderes definiertes, den "passiven Zustand" bildendes Signal bietet den Vorteil, dass an einem jeweiligen Codier-Eingang eine nicht richtig hergestellte oder unterbrochene Codier-Leitungsverbindung erkennbar ist.

Wird der "aktive" Zustand bzw. das Setzen-Signal (etwa Signal S₂) am Codier-Eingang empfangen, so löst dies aufgrund der Überwachung durch den Mikroprozessor oder alternativ im Wege der Auslösung eines Interrupts eine Kennungssetzroutine aus, die gemäß dem hier zugrundegelegten Ausführungsbeispiel auf eine über den Bus gesendete definierte Setzen-Nachricht wartet und, wenn diese vermittels des Bus-Treibers 32 und des CAN-Controllers 30 empfangen ist, dieser eine Soll-Knotenkennung entnimmt und diese als Knotenkennung setzt. Die Setzen-Nachricht wird vom Master-Knoten über den Bus 14 gesendet und kann im Prinzip von allen am Bus hängenden Client-Knoten empfangen werden. Diese Setzen-Nachricht adressiert im Identifier nicht einen speziellen Client-Knoten auf Grundlage der Knotenkennung, da diese möglicherweise noch nicht gesetzt ist oder noch nicht richtig oder noch nicht eindeutig gesetzt ist. Die Auswahl des Knotens, der die in der Setzen-Nachricht enthaltene Soll-Knotenkennung als eigene Knotenkennung setzen soll, erfolgt vermittels des am Codier-Eingang des betreffenden Knotens anliegenden Setzen-Signals.

Den ersten Knoten in der mit dem Master-Knoten verbundenen Client-Knoten-Kette spricht der Master-Knoten 12 unmittelbar über seinen Codier-Ausgang 40 und die Codier-Leitung 44 am Codier-Eingang 42 an. Die folgenden Client-Knoten werden durch den in Richtung zum Master-Knoten unmittelbar benachbaren, zuvor schon durch den Master-Knoten hinsichtlich der Knotenkennung konfigurierten Client-Knoten am Codier-Eingang angesprochen, indem dieser unmittelbar benachbarte Client-Knoten an seinem Codier-Ausgang das Setzen-Signal ausgibt. Um auch für diese Folge-Knoten-Ansprache von der Adressierung von Knoten über ihre Knotenkennung unabhängig zu sein, kann vorteilhaft vorgesehen sein, dass ein jeweiliger Client-Knoten dann, wenn nach Empfang des Setzen-Signals an seinem Codier-Eingang (Zustand "aktiv"), der Empfang des Setzen-Signals endet, der Codier-Eingang also wieder auf den Zustand "passiv" übergeht, der betreffende Knoten hierauf dadurch reagiert, dass er nun seinerseits an seinem Codier-Ausgang 40 das Setzen-Signal ausgibt, um so den nächsten Client-Knoten in der Kette anzusprechen und dort die Knotenkennungssetzroutine auszulösen. Ein jeweils vorangehender Knoten, der momentan an seinem Codier-Ausgang das Setzen-Signal ausgibt, wird bevorzugt durch eine vom Master-Knoten über den Bus gesendete Nächster-Knoten-Setzen-Nachricht dazu veranlasst, das Setzen-Signal nicht mehr auszugeben. Hierauf reagiert dann der Folgeknoten, der zuvor auf Grundlage des ausgegebenen Setzen-Signals gerade konfiguriert wurde, durch Ausgabe des Setzen-Signals an seinem Codier-Ausgang, um das Setzen-Signal dem nächsten, bisher noch nicht konfigurierten Client-Knoten am Codier-Eingang zuzuführen.

Ein zweckmäßiges, nur als Beispiel anzusehendes Konfigurationsszenario ist wie folgt:
Beim Einschalten des Systems wird von zentraler Stelle geprüft, ob alle CAN-Knoten kommunizieren können. Im Falle von CANopen nach dem Master-Slave-Prinzip (Master-Client-Prinzip) kommuniziert dazu der CANopen-Master-Knoten vermittels NMT-Diensten (Network Management Objekt-Diensten) oder/und SDO-Diensten (Service Data Object-Diensten) mit den CANopen-Slaves. Wie erwähnt, ist es zweckmäßig, wenn der CANopen-Master zugleich auch Master-Knoten für die KnotenKennungskonfiguration ist. Im Prinzip könnte aber auch ein anderer Knoten die Master-Funktion für die Knotenkennungskonfiguration übernehmen und insoweit beispielsweise zur Unterscheidung von CANopen-Master als "CAN-Knoten-ID"-Master oder "CAN-Note-ID"-Master bezeichnet werden.

Kann beim Einschalten nicht mit allen CAN-Knoten kommuniziert werden, können also nicht alle CAN-Knoten "an den Bus geholt" werden, so kann dies daran liegen, dass ein oder mehrere Knoten momentan eine falsche Knoten-Kennung ("CAN-Note-ID") haben, oder dass einzelne Knoten bisher noch keine Knotenkennung haben. In diesem Fall kann beispielsweise wie folgt erreicht werden, dass alle CAN-Knoten die richtige Knotenkennung erhalten:
1. Zuerst schaltet der Master-Knoten seinen Codier-Ausgang ("CAN-Note-ID-Out"-Ausgang) aktiv, d. h. der Master gibt am Codier-Ausgang das Setzen-Signal (etwa das Signal S₂) aus.
2. Ein CAN-Knoten (beim ersten Durchlauf der zum Master-Knoten unmittelbar benachbarte CAN-Knoten) registriert an seinem Codier-Eingang ("CAN-Note-ID-In"-Eingang) ein Übergang von passiv nach aktiv, empfängt also das Setzen-Signal. Als Reaktion hierauf schickt der Knoten eine CAN-Nachricht ab, in der er seine fest vorgegebene Komponentenkennung und seine aktuelle Knotenkennung mitteilt.
3. Der Master-Knoten wartet auf eine Antwort und wertet - wenn erhalten - die Antwort aus. Erfolgt nach einer vorgegebenen Wartezeit keine Antwort oder meldet sich eine Komponente, deren Knotenkennung nicht einer vorgegebenen Soll-Knotenkennung entspricht, so sendet der Master-Knoten eine CAN-Nachricht (Setzen-Nachricht) über den Bus, die zumindest die der Komponente zugeordnete Soll-Knotenkennung und bevorzugt zusätzlich auch die vom Master für den betreffenden Knoten erwartete Komponentenkennung enthält. Bevorzugt erfolgt zusätzlich auch eine Überprüfung auf Grundlage der fest vorgegebenen und unveränderbaren Komponentenkennung, um Fehler beim Aufbau des Netzwerks erkennen zu können. Meldet sich eine hinsichtlich der Komponentenkennung unerwartete Komponente, so signalisiert der Master-Knoten einer übergeordneten Applikation einen Komponentenfehler.
4. Ein CAN-Knoten (beim ersten Durchlauf der an dem dem Master-Knoten unmittelbar benachbart angeordnete Knoten) empfängt eine CAN-Nachricht (Setzen-Nachricht), die eine Soll-Knotenkennung ("CAN-Note-ID") enthält und vorzugsweise eine Komponentenkennung, wie vom Master-Knoten bei der Zuordnung der Soll-Knotenkennung dem Knoten zugrundegelegt. Nur der CAN-Knoten mit aktivem Codier-Eingang wertet die CAN-Nachricht (Setzen-Nachricht) weiter aus. Stimmt die darin angegebene Komponentenkennung mit der eigenen überein, so wertet der Knoten weiter die Soll-Knotenkennung ("CAN-Note-ID") aus und setzt die Soll-Knotenkennung als neue Knotenkennung. Als Reaktion hierauf sendet der Knoten schließlich eine CAN-Nachricht mit der eigenen Komponentenkennung und der neuen, auf Grundlage der Auswertung akzeptierten Knotenkennung ("CAN-Note-ID") über den Bus.
5. Der Master-Knoten wartet auf eine Antwort und wertet - wenn erhalten - die Antwort aus. Erfolgt nach einer vorgegebenen Wartezeit keine Antwort oder meldet sich hinsichtlich der Komponentenkennung eine unerwartete Komponente oder/und hinsichtlich der Knotenkennung ein unerwarteter Knoten, so signalisiert der Master-Knoten der Applikation einen Fehler. In jedem Fall schaltet der Master-Knoten seinen Codier-Ausgang nun auf passiv, wenn er vorher aktiv war, oder sendet eine CAN-Nachricht (Nächster-Knoten-Setzen-fertig-Nachricht oder "CAN-Note-Next"-Nachricht) über den Bus, die die Bedeutung "Weiterschalten" hat.
6. Ein CAN-Knoten empfängt über den Bus die Nächster-Knoten-Setzen-fertig-Nachricht" oder "CAN-Note-Next"-Nachricht. Derjenige Knoten, der momentan an seinem Codier-Ausgang das Setzen-Signal ausgibt, also den Codier-Ausgang im aktiven Zustand hat, schaltet diesen Ausgang auf dem Empfang dieser Nachricht zurück auf passiv, beendet also die Ausgabe des Setzen-Signals.
7. Ein CAN-Knoten registriert an seinem Codier-Eingang ein Übergang vom Zustand aktiv in den Zustand passiv. Als Reaktion hierauf legt der Konten einerseits seinen Codier-Ausgang auf aktiv, gibt dort also das Setzen-Signal aus. Hierdurch wird die Knotenkennungskonfiguration zum nächsten Knoten in der Knotenkette weitergeschaltet.
8. Es erfolgen erneut die Schritte 2 bis 7, bis der Master-Knoten alle CAN-Knoten einer Knotenkennungs-Kette ("CAN-Note-ID"-Kette) identifiziert und die Knoten hinsichtlich der Knotenkennung ("CAN-Note-ID") konfiguriert bzw. umkonfiguriert hat. Hat ein Knoten schon die richtige Knotenkennung gesetzt, kann auf eine Neukonfiguration dieser Kennung verzichtet werden.

Für den Konfigurationsmechanismus gemäß diesem Szenarium werden zwei CAN-Identifier (ggf. CAN-Identifier außerhalb des CANopen-Standards) benötigt, um die vom Master-Knoten und die von den CAN-Knoten gesendeten Nachrichten zu identifizieren. Der Master-Knoten benutzt den einen CAN-Identifier, die Slave-Knoten benutzen den anderen CAN-Identifier. Die Client-Knoten können zwischen den gemäß diesem Szenarium vom Master-Knoten gesendeten Nachrichten verschiedener Bedeutung auf Grundlage von in den Nutzdatenfelder codierten Informationen unterscheiden und diesen im Falle der Setzen-Nachricht die Komponentenkennung und die Soll-Knotenkennung entnehmen.

Auf entsprechende Weise kann neben einer dynamischen Vergabe von Knotenkennungen an die einzelnen Knoten des Netzwerks auch eine Diagnose durchgeführt werden, welche CAN-Knoten am Bus angeschlossen sind und ob diese ordnungsgemäß kommunizieren.

Man kann auch vorsehen, dass der Master-Knoten zumindest nach dem Einschalten, ggf. auch in Reaktion auf andere Ereignisse oder in regelmäßigen Abständen, mittels einer über den Bus gesendeten Nachricht von allen angeschlossenen Knoten Rückmelde-Nachrichten anfordert, die die jeweiligen Knotenkennung (Knoten-ID) sowie vorzugsweise auch eine jeweils fest vergebene Komponentenkennung erhält. Melden sich alle Knoten ordnungsgemäß mit den vorgesehenen Knotenkennungen zurück, so ist eine Konfiguration des Netzwerks dann nicht erforderlich. Fehlen hingegen Knoten oder melden sich mehrere Knoten mit der gleichen Knotenkennung, so kann dann die erfindungsgemäße Konfiguration des Netzwerks erfolgen, etwa nach dem obigen Szenario.

Es ist noch auf Folgendes hinzuweisen. Auch schon herkömmlich ist es möglich, CAN-Knoten, beispielsweise so genannte SLIO-Knoten, über den CAN-Bus hinsichtlich verwendeter Nachrichten-Identifier zu konfigurieren. Diese Konfiguration erfolgt auf Grundlage einer jeweiligen eindeutigen Knotenkennung, um den jeweiligen Knoten über den CAN-Bus überhaupt eindeutig ansprechen zu können. Bei der Erfindung geht es nicht oder zumindest nicht unmittelbar um die Konfiguration von Knoten hinsichtlich in Nachrichten zur Identifikation des Nachrichteninhalts verwendeter Nachrichten-Identifier, sondern um die Konfiguration der Knotenkennung selbst, auf deren Grundlage dann eine weite Konfiguration die jeweiligen Knoten erfolgen kann, beispielsweise auch hinsichtlich verwendeter Nachrichten-Identifier, soweit diese nicht auf Grundlage der gesetzten Knotenkennung vorgegeben sind bzw. wenn auf Grundlage der Knotenkennung vorgegebene Nachrichten-Identifier geändert werden sollen.

Es ist denkbar, CANopen-Protokoll-Software oder andere Anwendungs-Software so zu erweitern, dass eine jeweilige Komponente nach Erhalt einer Soll-Knotenkennung ("CAN-Note-ID") auf Grundlage entsprechender vorgegebener Konfigurationsdaten automatisch und ggf. quasi-instantan umkonfiguriert wird, vorzugsweise aber erst nach Durchlauf des NMT-Zustands "Reset Communication" über den Bus, um definierte Bedingungen zu schaffen. Auf diese Weise könnten Komponenten in der Art eines "Plug and Play" von einem Master-Knoten an den CAN-Bus genommen bzw. in ein bestehendes CAN-Netzwerk eingebunden werden.

Obwohl die sich zwischen den CAN-Knoten erstreckenden Codier-Leitungen keinen Bus-Charakter haben und insoweit streng genommen nicht als Erweiterung des herkömmlichen CAN-Busses angesehen werden können, ist es doch zweckmäßig, eine Integration dieser Leitungen mit den eigentlichen Bus-Leitungen zu einem die Knotenkennungs-Codier-Funktion unterstützenden Quasi-Bus vorzusehen. Während die eigentlichen Bus-Leitungen am einzelnen Knoten zum nächsten Knoten durchgeschleift sind, gilt dies hingegen nicht für die Codier-Leitungen. Gemäß CAN-Open-Standard sind herkömmlich folgende Leitungen vorgesehen: CAN - (0V), CAN + (24V), CAN low und CAN high. Die 24V von CAN + dient primär zur Spannungsversorgung des CAN-Bus-Controllers. Je nach Leistungsaufnahme kann auch die Spannungsversorgung für weitere Funktionalitäten des CAN-Knotens auf Grundlage der Versorgungsspannung der CAN+-Leitung erfolgen. Für große Leistungsaufnahme und zur Vermeidung von Störungen auf dem Bus ist es aber in der Regel vorzuziehen, für die anderen Knotenfunktionalitäten eine gesonderte Spannungsversogung zu realisieren.

Zu den angesprochenen Leitung gemäß CANopen-Standart kommt gemäß der hier angesprochenen, bevorzugten Ausgestaltung der Erfindung noch die Codier-Leitung (CAN-Codier) hinzu, wobei sich das Codier-Signal vorzugsweise auf das Massepotential (0V) von CAN - bezieht. Bevorzugt sind diese Leitungen einschließlich der CAN-Codier-Leitung zu einem Quasi-Bus kombiniert, indem etwa ein zur Verbindung mit einer Rückplatte (Backplane) vorgesehener Bus-Anschluss um entsprechende Codier-Anschlüsse (Einigangs-Pin, Ausgangs-Pin) erweitert ist. Die üblichen Nutz-Anschlüsse etwa einer entsprechenden Steckkarte sind vorzugsweise an einer Frontplatte vorgesehen.

Gemäß einer bevorzugten Ausgestaltung kann der Codier-Eingang ("CAN-Note-ID-In-Eingang") auch als herkömmlicher Codier-Eingang verwendet werden. Erkennt die Komponente beim Einschalten beispielsweise einen konstanten Hoch-Pegel (etwa Signal S₃ gemäß Fig. 4) oder ein anderes eindeutiges Vorgabe-Setzen-Signal an dem Codier-Eingang, so setzt sie ihre Knotenkennung ("CAN-Note-ID") auf eine in der Komponente festgelegte Vorgabe-Kennung (einen in der Komponente festgelegten Wert). Um zwischen einem solchen Setzen der Knotenkennung gemäß in den einzelnen Komponenten vor-festgelegten Kennungen und dem Setzen einer von einem Master-Knoten erhaltenen Soll-Knotenkennung sicher unterscheiden zu können, ist es zweckmäßig, eindeutig unterscheidbare Ansteuerzustände zu verwenden, also etwa ein dynamisches, insbesondere zwischen zwei Pegeln hin- und herschaltendes Signal für die Konfiguration der Knotenkennung auf Grundlage einer über den Bus übertragenen Setzen-Nachricht und ein konstantes (statisches) Hochpegelsignal für das Setzen der Knotenkennung auf Grundlage einer im Knoten vorab gelegten Vorgabe-Knotenkennung. Um entsprechende Vorgabe-Setzen-Signale an allen Knoten einer Knotenkette anlegen zu können, kann vorgesehen sein, dass jeder Knoten, der ein Vorgabe-Setzen-Signal an seinem Codier-Eingang empfängt, an seinem Codier-Ausgang ebenfalls das Vorgabe-Setzen-Signal ausgibt. Eine andere Möglichkeit ist, dass beim Aufbau des Netzwerks bei allen Knoten, die als Knotenkennung die im Knoten vorab gelegte Vorgabe-Kennung setzen sollen, der Codier-Eingang durch eine entsprechende Brücke mit CAN + verbunden wird, um am Codier-Eingang das Hochpegelsignal von CAN + anzulegen, das in Abweichung von Fig. 4 gemäß CANopen auf einem höheren Spannungsniveau, insbesondere einem Spannungsniveau von 24V, liegen könnte.

Fig. 3 zeigt beispielhaft eine Kette von CAN-Knoten, bei denen der CAN-Bus durch sich zwischen den Knoten paarweise erstreckende Leitungsanordnungen realisiert ist. Die Leitungen CAN -, CAN +, CAN low und CAN high sind im jeweiligen Knoten zwischen Buchsen-Anschlüssen auf der einen Seite und Stecker-Anschlüssen auf der anderen Seite durchgeschleift. Die mit den übrigen Leitungen beispielsweise in einem Kabel zusammengeführte Codier-Leitung ist hingegen nicht in den Knoten zwischen den Stecker-Anschlüssen und Buchsen-Anschlüssen durchgeschleift und die entsprechenden Codier-Anschlüsse des Knotens unterscheiden sich durch ihre Funktionen als Codier-Eingang 42 und Codier-Ausgang 40.

Vorteile der Erfindung und ihre Weiterbildungen sowie der behandelten Ausführungsbeispiele sind unter anderem die folgenden:
- Es können beliebig viele gleichartige Komponenten ins Netzwerk, insbesondere CAN-Netzwerk eingebunden werden, ohne dass eine Voreinstellung per Software- oder über Hardware-Brücken oder dergleichen vorgenommen werden muss. Es muss lediglich der Codier-Ausgang jeder Komponente mit dem Codier-Eingang der Folgekomponente verbunden werden. Der Aufwand für das Setzen der Knotenkennungen, insbesondere also etwa der Aufwand für Brücken im Kabelsatz, steigt dann nicht mehr mit der Anzahl von Komponenten im Netzwerk.
- Da auf Grundlage der Codier-Eingänge ein jeweils zu konfigurierender Knoten eindeutig ansprechbar ist, kann die Konfiguration der Knoten hinsichtlich ihrer Knotenkennungen softwaremäßig über den Bus erfolgen, ohne dass hierzu einzelne Knoten über eine Knotenkennung adressiert werden müssen.
- Kontaktprobleme durch Alterung oder Umgebungseinflüsse und Montagefehler können nicht mehr zu falschen Knotenkennungen führen, wodurch die Zuverlässigkeit entsprechender Netzwerke erhöht und der Prüfungsaufwand reduziert ist. Die Konfiguration der Knoten im Netzwerk hinsichtlich ihrer Knotenkennung über den Bus kann vorteilhaft nur bedarfsweise vorgesehen sein, etwa wenn sich auf das Einschalten des Netzwerks oder auf eine entsprechende Rückmeldeaufforderung nicht alle Knoten mit ihrer richtigen Knotenkennung zurückmelden.

## Patentansprüche

1. Knoten für ein Bus-Netzwerk, der einen Bus-Controller (30) mit einer Empfangs- und Sende-Schaltungsanordnung (32) und einem Bus-Anschluss zum Senden und Empfangen von Nachrichten über den Bus aufweist und der eine Knotenkennung-Setz-Einrichtung (46, 34, 30) zum Setzen einer Knotenkennung aufweist, auf deren Grundlage der Knoten (16) über den Bus (14) ansprechbar oder/und der Knoten im Netzwerk identifizierbar ist oder/und auf deren Grundlage von dem Knoten gesendete Nachrichten oder/und Nachrichteninhalte identifizierbar sind oder/und auf deren Grundlage für den Knoten relevante Nachrichten oder/und Nachrichteninhalte identifizierbar sind,
**dadurch gekennzeichnet,**
**dass** der Knoten (16) wenigstens einen der Knotenkennung-Setz-Einrichtung zugeordneten, gegenüber dem Bus-Anschluss gesonderten Setzen-Eingangsanschluss (42) aufweist, und dass die Knotenkennung-Setz-Einrichtung (46, 34, 30) durch Anlegen eines Setzen-Signals (S₂) an dem Setzen-Eingangsanschluss (42) dafür aktivierbar ist, über den Setzen-Eingangsanschluss oder/und den Bus-Anschluss eine Soll-Knotenkennung zu empfangen und diese als die Knotenkennung zu setzen.

2. Knoten nach Anspruch 1, **dadurch gekennzeichnet, dass** die Knotenkennung-Setz-Einrichtung (46, 34, 30) durch Anlegen des Setzen-Signals (S₂) an dem Setzen-Eingangsanschluss (42) dafür aktivierbar ist, eine in einer über den Bus-Anschluss empfangenen Setzen-Nachricht enthaltene Soll-Knotenkennung als die Knotenkennung zu setzen.

3. Knoten nach Anspruch 2, **dadurch gekennzeichnet, dass** der Knoten (16) dafür ausgelegt ist, auf Grundlage des Setzen-Signals (S₂) unabhängig von einer momentan gesetzten oder momentan nicht gesetzten Knotenkennung auf die Setzen-Nachricht anzusprechen und die in der empfangenen Setzen-Nachricht enthaltene Soll-Knotenkennung als Knotenkennung zu setzen.

4. Knoten nach einem der Ansprüche 1 bis 3, **dadurch gekennzeichnet, dass** der Knoten (16) wenigstens einen einer Setzen-Signal-Ausgabeeinrichtung (34, 48) zugeordneten, gegenüber dem Bus-Anschluss gesonderten Setzen-Ausgangsanschluss (40) aufweist, und dass die Setzen-Signal-Ausgabeeinrichtung (34, 48) dafür aktivierbar ist, über den Setzen-Ausgangsanschluss (40) ein vordefiniertes oder dem am Setzen-Eingang empfangenen Setzen-Signal entsprechendes Setzen-Signal (S₂) auszugeben.

5. Knoten nach Anspruch 4, **dadurch gekennzeichnet, dass** die Setzen-Signal-Ausgabeeinrichtung (34, 48) dafür ausgelegt ist, den Setzen-Eingangsanschluss (42) auf eine Beendigung eines daran angelegten Setzen-Signals (S₂) zu überwachen und in Reaktion auf die Beendigung am Setzen-Ausgangsanschluss (40) das Setzen-Signal (S₂) auszugeben.

6. Knoten nach Anspruch 5, **dadurch gekennzeichnet, dass** der Knoten (16) dafür ausgelegt ist, bei Ausgabe des Setzen-Signals (S₂) am Setzen-Ausgangsanschluss (40) den Bus (14) auf das Auftreten einer Nächster-Knoten-Setzen-Nachricht zu überwachen und in Reaktion auf das Auftreten der Nächster-Knoten-Setzen-Nachricht die Ausgabe des Setzen-Signals (S₂) am Setzen-Ausgangsanschluss (40) zu beenden.

7. Knoten nach Anspruch 6, **dadurch gekennzeichnet, dass** der Knoten (16) dafür ausgelegt ist, auf Grundlage der bestehenden Ausgabe des Setzen-Signals (S₂) am Setzen-Ausgangsanschluss (40) unabhängig von einer Adressierung der Nächster-Knoten-Setzen-Nachricht an den Knoten auf Grundlage der Knotenkennung auf die Nächster-Knoten-Setzen-Nachricht anzusprechen und die Ausgabe des Setzen-Signals (S₂) am Setzen-Ausgangsanschluss (40) zu beenden.

8. Knoten nach einem der Ansprüche 4 bis 7, **dadurch gekennzeichnet, dass** der Knoten dafür ausgelegt ist, den Bus auf das Auftreten einer an den Knoten auf Grundlage der Knotenkennung adressierten Nächster-Knoten-Setzen-Nachricht zu überwachen und in Reaktion auf das Auftreten der Nächster-Knoten-Setzen-Nachricht am Setzen-Ausgangsanschluss das Setzen-Signal auszugeben.

9. Knoten nach einem der Ansprüche 4 bis 8, **dadurch gekennzeichnet, dass** der Knoten dafür ausgelegt ist, den Bus auf eine das Auftreten einer an den Knoten auf Grundlage der Knotenkennung adressierten Nächster-Knoten-Setzen-fertig-Nachricht zu überwachen und in Reaktion auf das Auftreten der Nächster-Knoten-Setzen-Fertig-Nachricht die Ausgabe des Setzen-Signals am Setzen-Ausgangsanschluss zu beenden.

10. Knoten nach einem der Ansprüche 1 bis 9, **dadurch gekennzeichnet, dass** der Knoten (16) dafür ausgelegt ist, in Reaktion auf einen Empfang des Setzen-Signals am Setzen-Eingangsanschluss (42) oder/und in Reaktion auf eine über den Bus (14) empfangene Nachricht oder/und in Reaktion auf wenigstens ein anderes definiertes Ereignis eine Rückmeldenachricht über den Bus (14) zu senden, die eine dem Knoten fest zugeordnete Komponentenkennung und die momentane Knotenkennung enthält.

11. Knoten nach einem der Ansprüche 1 bis 10, **dadurch gekennzeichnet, dass** der Knoten (16) dafür ausgelegt ist, im Zusammenhang mit dem Setzen der Knotenkennung eine Bestätigungsnachricht oder eine/die Rückmeldenachricht über den Bus (14) zu senden, die eine/die dem Knoten fest zugeordnete Komponentenkennung und die gesetzte Knotenkennung enthält.

12. Knoten nach einem der Ansprüche 1 bis 11, **dadurch gekennzeichnet, dass** die Knotenkennung-Setz-Einrichtung (46, 34, 30) durch Anlegen eines von dem Setzen-Signal (S₂) unterschiedlichen Vorgabe-Setzen-Signals (S₃) an dem Setzen-Eingangsanschluss (42) dafür aktivierbar ist, eine in dem Knoten (16) abgelegte Vorgabe-Knotenkennung als die Knotenkennung zu setzen.

13. Knoten für ein Bus-Netzwerk (10) mit mehreren Knoten (16) nach einem der Ansprüche 1 bis 12, der einen Bus-Controller (30) mit einer Empfangs- und Sende-Schaltungsanordnung (32) und einem Bus-Anschluss zum Senden und Empfangen von Nachrichten über den Bus (14) aufweist und der dafür ausgelegt ist, andere Knoten (16) im Netzwerk zu konfigurieren,
**dadurch gekennzeichnet,**
**dass** der Knoten (12) eine Netzwerk-Konfigurationseinrichtung (34) aufweist, mit wenigstens einem einer Setzen-Signal-Ausgabeeinrichtung (34, 48) zugeordneten, gegenüber dem Bus-Anschluss gesonderten Setzen-Ausgangsanschluss (40), dass die Setzen-Signal-Ausgabeeinrichtung von der Netzwerk-Konfigurationseinrichtung dafür aktivierbar ist, über den Setzen-Ausgangsanschluss (40) ein vordefiniertes Setzen-Signal (S₂) auszugeben, und dass die Netzwerk-Konfigurationseinrichtung dafür ausgebildet ist, vermittels der Setzen-Signal-Ausgabeeinrichtung über den Setzen-Ausgangsanschluss oder - vorzugsweise - vermittels des Bus-Controllers (30) über den Bus-Anschluss eine Setzen-Nachricht zu senden, die eine einem Knoten (16) des Netzwerks (10) zugeordnete Soll-Knotenkennung enthält.

14. Knoten nach Anspruch 13, **dadurch gekennzeichnet, dass** der Knoten (12) dafür ausgelegt ist, vermittels des Bus-Controllers (30) eine Rückmeideaufforderung-Nachricht über den Bus-Anschluss zu senden.

15. Knoten nach Anspruch 13 oder 14, **dadurch gekennzeichnet, dass** der Knoten (12) dafür ausgelegt ist, vermittels des Bus-Controllers (30) eine Nächster-Knoten-Setzen-Nachricht sowie ggf. eine Nächster-Knoten-Setzen-fertig-Nachricht über den Bus-Anschluss zu senden.

16. Knoten nach einem der Ansprüche 13 bis 15, **dadurch gekennzeichnet, dass** der Knoten (12) dafür ausgelegt ist, vermittels des Bus-Controllers (30) wenigstens eine auf die gesendete Rückmeldeaufforderung oder/und auf die Ausgabe des Setzen-Signals über den Bus (14) oder/und auf die gesendete Nächster-Knoten-Setzen-Nachricht oder/und auf die gesendete Knoten-Setzen-Nachricht gesendete Rückmeldenachricht oder Bestätigungsnachricht en zu empfangen und deren eine Knotenkennung und eine Komponentenkennung enthaltenden Inhalt mit vorgegebenen Netzwerk-Konfigurationsdaten zu vergleichen.

17. Knoten nach Anspruch 16, **dadurch gekennzeichnet, dass** der Knoten (12) dafür ausgelegt ist, in Abhängigkeit von dem Inhalt der Rückmeldenachricht oder/und in Abhängigkeit von dem Vergleich die Setzen-Nachricht zu senden oder nicht zu senden oder/und die Setzen-Nachricht mit einer von dem Vergleich abhängigen, auf Grundlage der Netzwerk-Konfigurationsdaten festgelegten Soll-Knotenkennung zu senden.

18. Knoten nach einem der Ansprüche 1 bis 17, **dadurch gekennzeichnet, dass** der Knoten (12; 16) für ein CAN-Bus-Netzwerk (10) vorgesehen ist, wobei der Bus-Controller als CAN-Bus-Controller (30) mit einer CAN-Empfangs- und Sende-Schaltungsanordnung (32) und einem CAN-Bus-Anschluss zum Senden und Empfangen von Nachrichten über den CAN-Bus (14) ausgeführt ist.

19. Knoten nach Anspruch 18, **dadurch gekennzeichnet, dass** der Knoten (12; 16) für eine Datenkommunikation und Netzwerksteuerung über den CAN-Bus (14) gemäß einem CAN-Protokoll, insbesondere gemäß einem eine nachrichtenbezogene, den Inhalt der Nachricht kennzeichnende Adressierung vorsehenden CAN-Protokoll ausgelegt ist.

20. Knoten nach Anspruch 18 oder 19, **dadurch gekennzeichnet, dass** der Knoten (12; 16) für eine Datenkommunikation und Netzwerksteuerung über den CAN-Bus (14) gemäß einem auf dem/einem CAN-Protokoll aufsetzenden, eine Kommunikation und Netzwerksteuerung nach dem Master-Client-Prinzip vorsehenden Protokoll, vorzugsweise nach dem CANopen-Protokoll, ausgelegt ist.

21. Knoten nach Anspruch 20, vorzugsweise rückbezogen auf einen der Ansprüche 1 bis 12, ausgelegt oder konfiguriert oder konfigurierbar als Client-Knoten (16) des die Kommunikation und Netzwerksteuerung nach dem Master-Client-Prinzip vorsehenden Protokolls.

22. Knoten nach Anspruch 20, vorzugsweise rückbezogen auf einen der Ansprüche 13 bis 17, ausgelegt oder konfiguriert oder konfigurierbar als Master-Knoten (12) des die Kommunikation und Netzwerksteuerung nach dem Master-Client-Prinzip vorsehenden Protokolls.

23. Knoten nach einem der Ansprüche 1 bis 22, **dadurch gekennzeichnet, dass** der Knoten (12; 16) für die Bereitstellung wenigstens einer Nutzfunktionalität, beispielsweise eine analoge Eingabe, analoge Ausgabe, digitale Eingabe, digitale Ausgabe, Sensorik, Aktuatorik und dergleichen, ausgeführt ist.

24. Knoten nach einem der Ansprüche 1 bis 23, **gekennzeichnet durch** eine Prozessoranordnung (34), auf deren Grundlage wenigstens eine Einrichtung oder Funktionalität des Knotens realisiert ist.

25. Netzwerk, umfassend mehrere Knoten (12, 16) nach einem der Ansprüche 1 bis 24, insbesondere wenigstens einen Master-Knoten (12) nach einem der Ansprüche 13 bis 17 und mehrere Client-Knoten (16) nach einem der Ansprüche 1 bis 12, sowie umfassend eine die Knoten an ihren Bus-Anschlüssen verbindende Leitungsanordnung, (18, 20) wobei sich zwischen den Knoten erstreckende Leitungsanordnungssegmente derart zwischen den Bus-Anschlüssen geschaltet oder zumindest bezogen auf über die Leitungsanordnung übertragene Signale miteinander verbunden sind oder derart von Leitungsanordnungssegment zu Leitungsanordnungssegment durchgehend ausgeführt sind, dass die Leitungsanordnung (18, 20) einen vorzugsweise linearen oder/und seriellen Netzwerk-Bus (14) bildet, der einen zueinander parallelen, voneinander unabhängigen Empfang von über den Bus übertragenen Nachrichten durch mehrere Knoten vorsieht.

26. Netzwerk nach Anspruch 25, **dadurch gekennzeichnet, dass** von den Knoten mehrere eine Kette von an ihren Setzen-Eingangsanschlüssen (42) und Setzen-Ausgangsanschlüssen (40) durch Setzen-Leitungsanordnungen (44) verbundenen Knoten (12, 16) bilden, wobei die Setzen-Leitungsanordnungen (44) sich paarweise zwischen den Knoten erstrecken und nicht von Setzen-Leitungsanordnung zu Setzen-Leitungsanordnung durchgehen.

27. Netzwerk nach Anspruch 25 oder 26, **dadurch gekennzeichnet, dass** zumindest bei einem der Knoten, vorzugsweise bei allen Knoten der Bus-Anschluss und der Setzen-Ausgangsanschluss und - wenn vorgesehen - der Setzen-Eingangsanschluss einen gemeinsamen Busanschluß-Verbinder aufweist.

28. Netzwerk nach einem der Ansprüche 25 bis 27, **dadurch gekennzeichnet, dass** es als CAN-Bus-Netzwerk (10) ausgeführt ist, wobei die Knoten (12, 16) zum Senden und Empfangen von Nachrichten über den einen CAN-Bus bildenen Bus ausgeführt ist.

29. Netzwerk nach Anspruch 28, **dadurch gekennzeichnet, dass** die Knoten (12, 16) für eine Datenkommunikation und Netzwerksteuerung über den CAN-Bus (14) gemäß einem CAN-Protokoll, insbesondere gemäß einem eine nachrichtenbezogene, den Inhalt der Nachricht kennzeichnende Adressierung vorsehenden CAN-Protokoll ausgelegt sein können.

30. Netzwerk nach Anspruch 28 oder 29, **dadurch gekennzeichnet, dass** die Knoten (12, 16) für eine Datenkommunikation und Netzwerksteuerung über den CAN-Bus (14) gemäß einem auf dem/einem CAN-Protokoll aufsetzenden, eine Kommunikation und Netzwerksteuerung nach dem Master-Client-Prinzip vorsehenden Protokoll, vorzugsweise nach dem CANopen-Protokoll, ausgelegt sind, wobei ein Knoten, vorzugsweise der Master-Knoten (12), als Master-Knoten des die Kommunikation und Netzwerksteuerung nach dem Master-Client-Prinzip vorsehenden Protokolls ausgelegt oder konfiguriert oder konfigurierbar ist und die übrigen Knoten (16) als Client-Knoten des die Kommunikation und Netzwerksteuerung nach dem Master-Client-Prinzip vorsehenden Protokolls ausgelegt oder konfiguriert oder konfigurierbar sind.

31. Verfahren zum Konfigurieren eines Netzwerks (10) nach einem der Ansprüche 25 bis 30, bei dem wenigstens ein Master-Knoten (12) nach einem der Ansprüche 13 bis 17 mehrere Client-Knoten (16) nach einem der Ansprüche 1 bis 12 konfiguriert, indem der Master-Knoten (12) nacheinander für jeden zu konfigurierenden Client-Knoten (16) wenigstens eine Setzen-Nachricht vermittels des Bus-Controllers (30) über den Bus (14) sendet, die eine dem jeweiligen Client-Knoten zugeordnete Soll-Knotenkennung enthält, wobei die zu konfigurierenden Knoten nacheinander durch Anlegen eines Setzen-Signals (S₂) an ihrem Setzen-Eingangsanschluss (42) dafür aktiviert werden, eine ihnen zugeordnete, in einer über den Bus-Anschluss empfangenen Setzen-Nachricht enthaltene Soll-Knotenkennung als die Knotenkennung zu setzen.

32. Verfahren nach Anspruch 31, **dadurch gekennzeichnet, dass** der Master-Knoten (12) zwischen den Setzen-Nachrichten ferner Nächster-Knoten-Setzen-Nachrichten sendet oder/und an seinem Setzen-Ausgangsanschuß die Ausgabe des Setzen-Signals beendet, damit ein schon konfigurierter Knoten (16) an seinem Setzen-Ausgangsanschluss (40) das Setzen-Signal ausgibt, welches ein noch nicht konfigurierter Knoten (16) an seinem Setzen-Eingangsschluss (42) empfängt.

33. Verfahren nach Anspruch 31 oder 32, **dadurch gekennzeichnet, dass** der Master-Knoten (12) zur Bestimmung eines momentanen Konfigurationszustands des Netzwerks (10) wenigstens eine Rückmeldeaufforderung-Nachricht über den Bus-Anschluss sendet.

34. Verfahren nach einem der Ansprüche 31 bis 33, **dadurch gekennzeichnet, dass** der Master-Knoten (12) wenigstens eine auf die gesendete Rückmeldeaufforderung oder/und auf die Ausgabe des Setzen-Signals (S₂) über den Bus (14) oder/und auf die gesendete Nächster-Knoten-Setzen-Nachricht oder/und auf die gesendete Knoten-Setzen-Nachricht gesendete Rückmeldenachricht oder Bestätigungsnachricht von einem jeweiligen Client-Knoten oder den Client-Knoten empfängt und deren eine Knotenkennung und eine Komponentenkennung enthaltenden Inhalt mit vorgegebenen Netzwerk-Konfigurationsdaten vergleicht.

35. Verfahren nach Anspruch 34, **dadurch gekennzeichnet, dass** der Master-Knoten (12) in Abhängigkeit von dem Inhalt der Rückmeldenachricht oder/und in Abhängigkeit von dem Vergleich die Setzen-Nachricht sendet oder nicht sendet oder/und die Setzen-Nachricht mit einer von dem Vergleich abhängigen, auf Grundlage der Netzwerk-Konfigurationsdaten festgelegten Soll-Knotenkennung sendet.
